# EUROPEAN PATENT APPLICATION

(11) **EP 1 518 832 A1**
(43) Date of publication of application: **30.03.2005**
(21) Application number: 04020523.9
(22) Date of filing: 30.08.2004
(51) Int. Cl.: C03B 37/014, C03B 37/018, G02B 6/22

(54) **Low loss optical fiber and method for fabricating optical fiber preform thereof**

(30) Priority: 19.09.2003 KR 2003065094
(71) Applicant: Samsung Electronics Co., Ltd., Suwon-si, Gyeonggi-do (KR)
(72) Inventor: Oh, Sung-Koog, Yeongtong-gu, Suwon-si, Gyeonggi-do (KR); Kim, Sung-Jin, Yeongtong-gu, Suwon-si, Gyeonggi-do (KR)
(74) Representative: Lang, Johannes, Dipl.-Ing.

(57) **Abstract**

Disclosure is a low loss optical fiber (200) comrising: a core (230) including an inner core portion (210) which includes pure silica and is positioned at a center of the low loss optical fiber, and an outer core portion (220) which surrounds the inner core portion and includes silica doped with a refractive index controlling material and a clad (260) for surrounding the core.

Corresponding MCVD, OVD and VAD - methods for making the low loss optical fiber are also disclosed.

## Description

### BACKGROUND OF THE INVENTION

### 1. Field of the Invention

The present invention relates to an optical communication network, and more particularly to an optical fiber serving as a transmission line in an optical communication network and an optical fiber preform used for producing the optical fiber.

### 2. Description of the Related Art

A modified chemical vapor deposition (MCVD) process for fabricating an optical fiber perform involves heating an outer peripheral surface of a quartz tube while injecting raw materials, such as SICl4, GeCl4, POCl3 and so forth, into the quartz tube together with oxygen O2. As a result of a heat-oxidization reaction through the MCVD, an oxide deposit such as soot is created in the quartz tube and deposited on an inner wall of the quartz tube. The density of chemical raw materials provided in the quartz tube is finely controlled by a computer, thereby forming a clad layer and a core layer which have refractive indices different from each other. Since a refractive index of the core layer capable of propagating light must be higher than a refractive index of the clad layer, more GeCl4 must be provided when depositing the core layer than when depositing the clad layer.

After completing the depositing process, closing and collapsing processes for reducing a diameter of the quartz tube are performed by heating the quartz tube at a high temperature. When performing the closing and the collapsing processes, GeO₂ compound is decomposed at a temperature above 1400°C, so that an area having a reduced refractive index is created in a center of the core layer. This area is called a core dip. That is, an evaporation phenomenon (GeO₂(s) ↔ GeO(g) + 1/2 O₂(g)) occurs in the center of the core layer, so that the core dip having the reduced refractive index is created. It is noted that an optical fiber having the core dip has an inferior coupling efficiency with respect to an optical device, a reduced transmission bandwidth, and a great transmission loss of a long wavelength region (1565∼1625nm). Further, a molecular defect, which is caused by the breakage of a Ge-O chemical bond in the core dip when performing the closing and the collapse processes as well as the drawing process increases a scattering loss and a bending loss of the optical fiber.

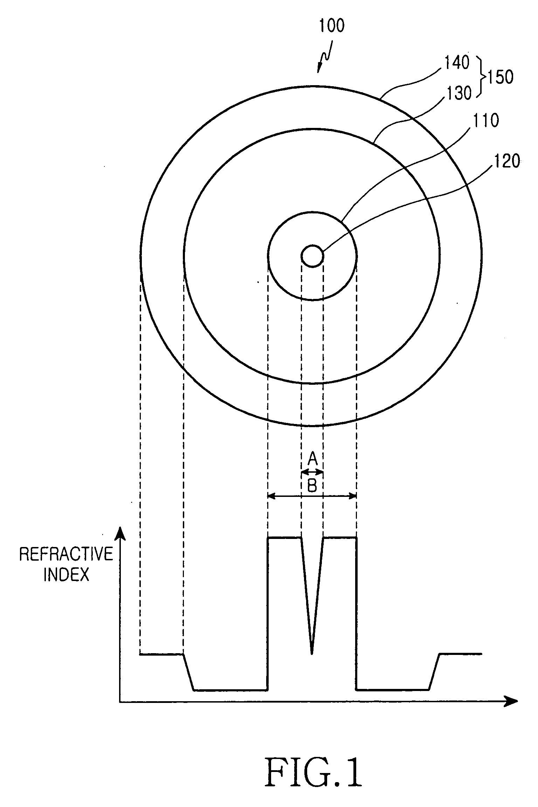

FIG. 1 is a conventional optical fiber structure having the core dip. An optical fiber 100, serving as an optical transmission medium, includes a core 110 having a core dip 120 in the center thereof and a clad 150 surrounding the core 110. The clad 150 includes an inner clad 130 surrounding the core 110 and an outer clad 140 surrounding the inner clad 130. As a ratio of the diameter (A) of the core dip 120 to the diameter (B) of the core dip 110 increases, the signal loss increases in the long wavelength region.

As described above, the conventional optical fiber 100 having the core dip 120 has a problem in that the signal loss is large in the long wavelength region caused by the molecular defect within the core dip 120.

### SUMMARY OF THE INVENTION

Accordingly, the present invention has been made to solve the above-mentioned problems and provides additional advantages, by providing a low loss optical fiber capable of reducing signal loss in a long wavelength region and a method for fabricating an optical fiber preform used for drawing the low loss optical fiber.

According to one aspect of the present invention, a low loss optical fiber includes a core having an inner core portion, which includes pure silica and is positioned at a center of the low loss optical fiber; and an outer core portion surrounding the inner core portion and having silica doped with a refractive index controlling material: and, a clad for surrounding the core.

### BRIEF DESCRIPTION OF THE DRAWINGS

The above features and advantages of the present invention will be more apparent from the following detailed description taken in conjunction with the accompanying drawings, in which:
- FIG. 1: depicts a conventional optical fiber structure having a core dip;
- FIG. 2: depicts a low loss optical fiber according to a preferred embodiment of the present invention;
- FIG. 3: is a graph showing a loss difference between a conventional optical fiber and a low loss optical fiber shown in FIG. 2; and,
- FIG. 4: illustrates a method of fabricating an optical fiber preform used for producing a low loss optical fiber according to a preferred embodiment of the present invention.

### DETAILED DESCRIPTION OF THE INVENTION

Hereinafter, preferred embodiments of the present invention will be described in detail with reference to the accompanying drawings. Note that the same or similar components in drawings are designated by the same reference numerals as far as possible although they are shown in different drawings. For the purposes of clarity and simplicity, a detailed description of known functions and configurations incorporated herein will be omitted as it may make the subject matter of the present invention unclear.

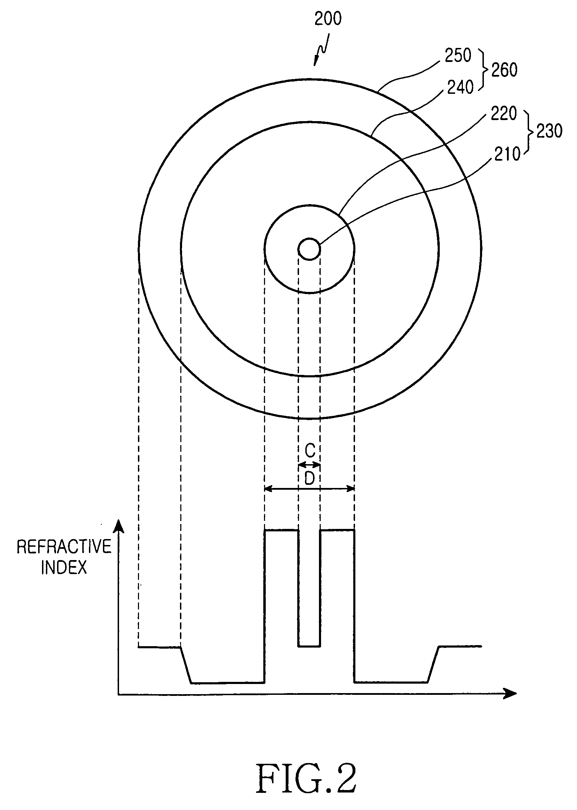

FIG. 2 shows a low loss optical fiber 200 according to a preferred embodiment of the present invention. As shown, the low loss optical fiber 200 includes a core 230 and a clad 260. The core 230 is an optical transmission medium and has a multi-layer structure. In particular, the core 230 includes an inner core portion 210 made of pure silica having a relatively-low refractive index, in the center of the core 230. The core 230 also includes an outer core portion 220 surrounding the inner core portion 210 is made of silica doped with a refractive index controlling material having a relatively-high refractive index. A ratio of the diameter (C) of the inner core portion 210 to the diameter (D) of the core 230 should be greater than 0 but less than 0.4.

The clad 260 has a multi-layer structure. In particular, the clad 260 includes an inner clad portion 240 adjacent to the core 230 and includes an outer clad portion 250 surrounding the inner clad portion 240 and having a refractive index higher than that of the inner clad portion 240. The clad 260 surrounds the core 230 in order to restrict light incident into the optical fiber within the core 230. A refractive index of the inner clad portion 240 adjacent to the core 230 is lower than that of the outer core portion 220. The inner clad portion 240 is made of silica doped with a refractive index controlling material. In addition, the outer clad portion 250 may be made of silica doped with a refractive index controlling material or pure silica. The refractive index controlling material may be any one of chemical compounds, such as GeO₂, P₂O₅ and so forth, which are used for controlling a conventional refractive index, or may be combination of the above chemical compounds.

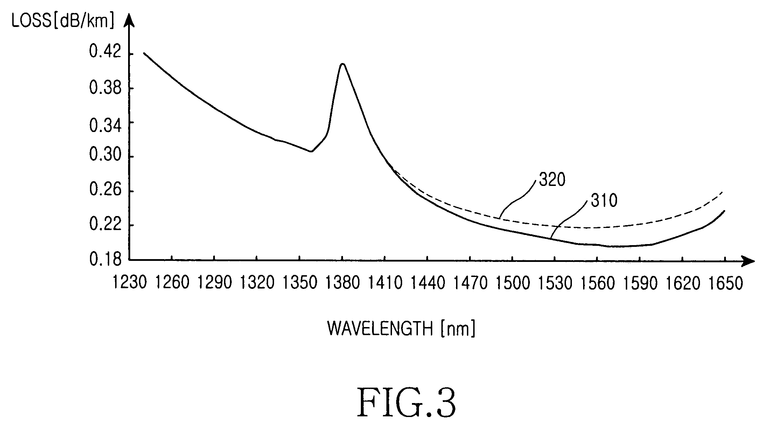

FIG. 3 is a graph showing a loss difference between a conventional optical fiber and a low loss optical fiber shown in FIG. 2. In particular, FIG. 3 shows a transmission loss curve 310 of the low loss optical fiber 200 and a transmission loss curve of the conventional optical fiber having the core dip. Note that the conventional optical fiber includes a core of a single layer structure having the core dip in the center thereof and a clad of a multi-layer structure surrounding the core and having inner and outer clad portions. Each element of the conventional optical fiber has the same refractive index and diameter as each corresponding element of the low loss optical fiber 200. As shown in FIG. 3, it can be understood graphically that a transmission loss of the low loss optical fiber is lower than that of the conventional optical fiber in the long wavelength region.

An optical fiber preform for producing a low loss optical fiber according to the present invention may be fabricated by various fabricating processes.

First, one embodiment of fabricating the low loss optical fiber according to the MCVD (modified chemical vapor deposition) will be described hereinafter.

While providing raw materials, such as SICl4, GeCL4, POCl3 and so forth, into a quartz tube together with oxygen O2, an outer peripheral surface of the quartz tube is heated by means of an oxygen/hydrogen burner (or torch). The density of chemical raw materials provided into the quartz tube is controlled by a computer, thereby forming a clad layer and a core layer which have refractive indices different from each other on an inner wall of the quartz tube, wherein the clad layer and the core layer are doped with a refractive index controlling material. Furthermore, a raw material including only SiCl₄ is provided into the quartz tube together with oxygen, thereby forming an inner core layer made of pure silica at an outer core layer. After finishing the deposition process, closing and collapsing processes for reducing the diameter of the quartz tube are performed by heating the quartz tube at a high temperature, thereby forming a first optical fiber preform. At this time, in order to extend the diameter of the first optical fiber preform, an over-cladding process using another quartz tube can be further performed. In the deposition process, GeCL4 and POCl₃ are chemical compounds used for adjusting a refractive index. Also, in the deposition process, if necessary, any one of GeCL₄ and POCl₃ can be used, or a combination of GeCL4 and POCl₃ can be used. Alternatively, other chemical compounds, such as CF₄, SIF₄ and so forth, can be further used together with GeCL₄ and POCl₃. The low loss optical fiber can be drawn by melting an end of the first optical fiber preform (or a second optical fiber preform). The quartz tube of the first optical fiber preform corresponds to the outer clad portion of the low loss optical fiber and the clad layer corresponds to the inner clad portion of the low loss optical fiber.

In an alternate embodiment, the optical fiber preform used to produce a low loss optical fiber according to the present invention can be fabricated using a furnace chemical vapor deposition (FCVD) method. Note that FCVD processes are essentially the same as MCVD processes except that a fixed or a movable furnace is used instead of the oxygen/hydrogen burner. Furthermore, the optical fiber preform used for producing a low loss optical fiber can be fabricated by a plasma chemical vapor deposition (PVCD) method. Similarly, PVCD processes are the same as the MCVD processes except that a microwave resonator is further used in order to produce plasma.

Another embodiment of fabricating the optical fiber preform used for producing a low loss optical fiber using an outside vapor deposition(OVD) method according to the present invention will be described hereinafter.

First, an outer peripheral surface of a graphite rod is projected with flame and chemical raw materials by a torch, so that layers are formed according to a hydrolysis reaction. The density of chemical raw materials provided by the torch is controlled by a computer, thereby forming an inner core layer, an outer core layer, and a clad layer which have refractive indices different from each other on the outer peripheral surface of the graphite rod. The inner core layer and the outer core layer are made of pure silica and silica doped with a refractive index controlling material, respectively. The clad layer is made of silica doped with a refractive index controlling material.

After finishing the process of forming the layers, the graphite rod is removed. Closing and collapsing processes for reducing the diameters of the layers are performed by heating the layers at a high temperature, thereby forming a first optical fiber preform. To extend the diameter of the first optical fiber preform, an over-cladding process is further performed using a quartz tube, thereby forming a second optical fiber preform. The second optical fiber preform is melted, thereby drawing a low loss optical fiber. The quartz tube of the second optical fiber preform corresponds to an outer clad portion of the low loss optical fiber and the clad layer corresponds to an inner clad portion of the low loss optical fiber.

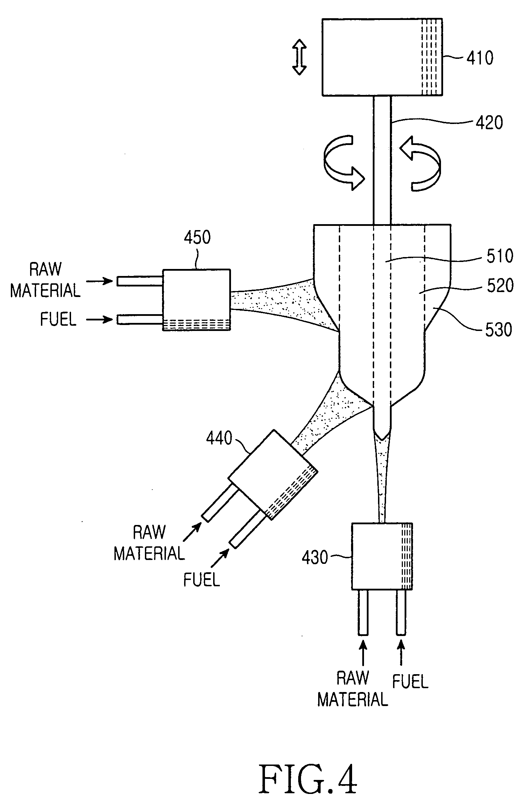

FIG. 4 shows a method for fabricating an optical fiber preform used to produce the low loss optical fiber according to a preferable embodiment of the present invention. The apparatus shown in FIG. 4 to fabricate the optical fiber perform is achieved through a vapor phase axial deposition (VPD) method. The apparatus includes a chuck 410, an initial rod 420 made of pure silica, and first to third burners 430 to 450.

The chuck 410 is vertically movable and can rotate. The chuck 410 fixes an upper portion of the initial rod 420 by clamping the upper portion of the initial rod 420.

The initial rod 420 having the upper portion fixed by the chuck 410 moves upward while rotating during an axial deposition process is carried out.

The first burner 430 projects flame toward the center of the initial rod 420, thereby downwardly growing an inner core layer 510 made of pure silica. The first burner 430 is provided with fuel and raw materials. The inner core layer 510 is deposited at an end portion of the initial rod 420 using a flame projection. The raw materials include chemical compounds such as SiCl₄, GeCl₄, POCl₃ and so forth.

The second burner 440 projects flame toward an outer peripheral surface of the inner core layer 510, thereby depositing the outer core layer 520 made of silica doped with a refractive index controlling material. The second burner 440 is provided with fuel and raw materials. The outer core layer 520 is deposited at an outer peripheral surface of the inner core layer 510 using the flame injection.

The third burner 450 projects flame toward an outer peripheral surface of the outer core layer 520, thereby depositing a clad layer 530 made of silica doped with a refractive index controlling material. The third burner 450 is provided with fuel and raw materials. The clad layer 530 is deposited at the outer peripheral surface of the outer core layer 520 by the flame injection.

Although it is not illustrated, the first optical fiber preform can be fabricated through VPD. To extend the diameter of the first optical fiber preform, an over-cladding process is further performed by using the quartz tube, thereby forming a second optical fiber preform. The low loss optical fiber can be drawn by melting an end portion of the second optical fiber preform. The quartz tube of the second optical fiber preform corresponds to the outer clad portion of the low loss optical fiber and the clad layer corresponds to the inner clad portion of the low loss optical fiber.

The clad layer of the low loss optical fiber according to the present invention may either have a multi-layer structure including an inner clad portion and an outer clad portion or a single layer structure if necessary. In other words, the low loss optical fiber can be drawn from the first optical fiber preform without additionally performing the over-cladding process.

Also, the clad layer of the low loss optical fiber according to the present invention can be made of predetermined raw materials under the condition of a lower refractive index than that of the core layer of the low loss optical fiber. In other words, the clad layer can be made of pure silica or silica doped with a refractive index controlling material.

Furthermore, the low loss optical fiber according to the present invention includes a single-mode optical fiber for transmitting a single mode or a multi- mode optical fiber for transmitting a plurality of modes. The single-mode optical fiber and the multi-mode optical fiber are classified by the diameter of a core and a refractive index distribution of an optical fiber. Therefore, a desired low loss optical fiber can be fabricated according to the above-described fabricating methods.

As described above, the low loss optical fiber according to the present invention can reduce signal loss in a long wavelength region compared to the conventional optical fiber by including the core layer having the inner core portion made of pure silica in the center of the low loss optical fiber.

While the invention has been shown and described with reference to certain preferred embodiments thereof, it will be understood by those skilled in the art that various changes in form and details may be made therein without departing from the spirit and scope of the invention. Consequently, the scope of the invention should not be limited to the embodiments, but should be defined by the appended claims and equivalents thereof.

## Claims

1. A low loss optical fiber comprising:
a core having an inner core portion and includes pure silica and an outer core portion surrounding the inner core portion and includes silica doped with a refractive index controlling material; and
a clad surrounding the core.

2. The low loss optical fiber as claimed in claim 1, wherein a ratio of a diameter of the inner core portion to a diameter of the outer core portion is greater than 0 and less than 0.4.

3. The low loss optical fiber as claimed in claim 1, wherein the clad includes an inner clad portion surrounding the outer core portion and having a refractive index lower than the outer core portion, and an outer clad portion surrounding the inner clad portion.

4. The low loss optical fiber as claimed in claim 1, wherein the clad includes an inner clad portion surrounding the outer core portion and made of silica doped with a refractive index controlling material, and an outer clad portion surrounding the inner clad portion.

5. The low loss optical fiber as claimed in claim 4, wherein the outer clad portion having a refractive index higher than that of the inner clad portion.

6. A method for fabricating an optical fiber preform, the method comprising the steps of:
i) depositing a clad layer including silica doped with a refractive index controlling material on an inner wall of a quartz tube;
ii) depositing an outer core layer including silica doped with a refractive index controlling material on the clad layer; and
iii) depositing an inner core layer including pure silica on the outer core layer.

7. The method as claimed in claim 6, further comprising the step of heating the quartz tube to reduce the diameter of the quartz tube.

8. The method as claimed in claim 6, wherein the optical fiber preform is fabricated through a modified chemical vapor deposition (MCVD) process using a burner heating an outer peripheral surface of the quartz tube while moving along a longitudinal direction of the quartz tube.

9. The method as claimed in claim 6, wherein the optical fiber preform is fabricated through a furnace chemical vapor deposition (FCVD) process using a furnace heating an outer peripheral surface of the quartz tube.

10. The method as claimed in claim 9, wherein the furnace heats the outer peripheral surface of the quartz tube while moving along a longitudinal direction of the quartz tube.

11. A method for fabricating an optical fiber preform, the method comprising the steps of:
i) depositing an inner core layer including pure silica on an outer peripheral surface of a rod;
ii) depositing an outer core layer including silica doped with a refractive index controlling material on the inner core layer; and
iii) depositing a clad layer, which has a relatively-low refractive index, on an outer peripheral surface of the outer core layer.

12. The method as claimed in claim 11, further comprising the steps of:
iv) removing the rod from a first resultant structure obtained through step iii); and
v) reducing an outer diameter of a second resultant structure obtained through step iv) by heating the second resultant structure in such a manner so that an inner empty space of the second resultant structure is removed.

13. A method for fabricating an optical fiber preform, the method comprising:
i) growing an inner core layer including pure silica along a longitudinal direction of a rod from one end of the rod;
ii) depositing an outer core layer including silica doped with a refractive index controlling material on an outer peripheral surface of the inner core layer; and
iii) depositing a clad layer, which has a relatively low refractive index, on an outer peripheral surface of the outer core layer.
